# EUROPÄISCHE PATENTSCHRIFT

(11) **EP 1 002 488 B1**
(45) Veröffentlichungstag und Bekanntmachung des Hinweises auf die Patenterteilung: **12.09.2001**
(21) Anmeldenummer: 99121635.9
(22) Anmeldetag: 30.10.1999
(51) Int. Cl.: A47J 27/21

(54) **Elektrischer Wasserkocher**
Electrical boiler
Bouilloire électrique

(30) Priorität: 17.11.1998 DE 19852893; 11.08.1999 DE 29913796 U
(43) Veröffentlichungstag der Anmeldung: 24.05.2000
(73) Patentinhaber: Schreitmüller, Bernd, 55130 Mainz (DE)
(72) Erfinder: Schreitmüller, Bernd, D-55130 Mainz (DE); Schreitmüller Christina, D-55130 Mainz (DE)
(74) Vertreter: Quermann, Helmut, Dipl.-Ing.

(56) Entgegenhaltungen:
- EP-A- 0 807 394
- DE-U- 29 610 231
- FR-A- 2 692 426
- US-A- 4 310 748

## Beschreibung

Die Erfindung betrifft einen elektrischen Wasserkocher, der ein Gefäß für das Wasser, eine den Boden des Gefäßes bildende Heizplatte, ein Heizelement, einen Thermostat sowie einen Netzanschluß aufweist.

Bei herkömmlichen Wasserkochern bilden das Gefäß und das Heizelement eine Einheit, so daß bei Beschädigung des Gefäßes, insbesondere bei elektrischen Wasserkochern mit Glasgefäß, kein Austausch des Gefäßes möglich ist. Des weiteren ist eine maschinelle Reinigung des Gefäßes eines herkömmlichen elektrischen Wasserkochers nicht möglich, da die Elektrik bzw. die Heizplatte des Gerätes untrennbar mit dem Gefäß verbunden sind.

In der DE 296 10 231 U1 ist ein Kochtopf beschrieben, der aus einem Glasmantel und einer im Boden fest verklebten Heizplatte aus Metall besteht. Die Heizplatte weist eine am äußeren Rand umlaufende Nut auf, in die ein Glaszylinder fest eingeklebt ist. Die Bauform mit dem eingeklebten Behältermantel soll zudem den Vorteil aufweisen, daß im Falle eines Bruches des Behältermantels dieser auch austauschbar ist. Es wird vorgeschlagen, dem Kochtopf Lösungsmittel für den Altkleber mitzuliefern, so daß ein einfaches Entfernen des unteren festgeklebten Randes vor dem Einsetzen des neuen Mantels möglich ist. Dieser Vorschlag ist praxisfern, da diese Demontage des Kochtopfes vom Laien nicht ohne weiteres durchgeführt werden kann und in aller Regel dann, wenn der Glasmantel gebrochen ist, das mitgelieferte Lösungsmittel für den Altkleber nicht auffindbar ist.

Aus der GB 2 253 551 A ist ein Kochtopf bekannt, dessen Gefäß insgesamt beispielsweise aus Keramik oder Glaskeramik besteht, wobei die Beheizung des Gefäßes mittels Dickfilm-Technologie erfolgt, indem eine Folie auf die Unterseite des Topfbodens aufgebracht wird. Mittels der Folie wird der Topfboden beheizt. Diese Dickfilm-Technologie stellt ein sehr teures Verfahren dar. Bei dem bekannten Kochtopf tritt das Heizelement nicht in unmittelbaren Kontakt mit dem Inhalt des Kochtopfes.

Aus der EP 0 872 201 A1 ist ein zweiteiliger Kochtopf bekannt, bei dem das Heizelement sowie die übrige Elektrik des Kochers in einem Unterteil angeordnet ist. Das Gefäß weist einen metallischen Boden auf, der von unten beheizt wird. Nachteilig ist bei diesem Kochtopf die aufwendige Gestaltung des Gefäßes. Bei einem Bruch bzw. einer Beschädigung des Gefäßes ist dieses insgesamt, das heißt einschließlich des metallischen Bodens zu verwerfen.

Aufgabe der Erfindung ist es, einen elektrischen Wasserkocher zu schaffen, der die genannten Nachteile nicht aufweist und es ermöglicht, das Gefäß eines elektrischen Wasserkochers von dessen Heizelement, Thermostat und Netzanschluß auf einfache Weise zu trennen und wieder zu verbinden.

Gelöst wird die Aufgabe durch einen elektrischen Wasserkocher, der ein Gefäß, eine den Boden des Gefäßes bildende Heizplatte, ein Heizelement , einen Thermostat und einen Netzanschluß aufweist, wobei das Gefäß aus einem oben und unten offenen Oberteil, einem Unterteil mit Heizplatte und Heizelement sowie einem das Oberteil und das Unterteil verbindenden Verbindungselement zusammengesetzt ist, wobei ferner das Oberteil aus hitzebeständigem Glas besteht und mit dem Verbindungselement mittels einer Klebverbindung fest verbunden ist, sowie das Verbindungselement mit dem Unterteil lösbar verbunden ist.

Wesentlich ist somit, daß das Gefäß neben der erforderlichen oberen Öffnung zusätzlich unten offen gestaltet ist, so daß das Gefäß nicht nur durch das Oberteil, sondern auch durch das Unterteil gebildet ist, das funktionell den Boden des Gefäßes umfaßt. Hierbei ist das aus Glas bestehende Oberteil nicht unmittelbar im Unterteil gehalten, sondern mit dem Verbindungselement mittels der Klebverbindung fest verbunden. Die lösbare Verbindung erfolgt zwischen dem Verbindungselement und dem Unterteil. Ein besonderer Vorteil des erfindungsgemäβen elektrischen Wasserkochers liegt darin, daß bei Beschädigungen des aus Glas bestehenden Oberteils des Gefäßes nicht das ganze Gerät auszutauschen ist, sondern nur das gläserne Oberteil sowie das mit diesem verbundene Verbindungselement. Dies bringt dem Verbraucher einen finanziellen Vorteil und ist dem Austausch einer beschädigten Glaskanne bei elektrischen Kaffeemaschinen vergleichbar.

Ein weiterer Vorteil liegt in der Reinigung des elektrischen Wasserkochers. Bei täglicher Benutzung ist die Verschmutzung/Verkalkung des Geräts unvermeidbar. Bei dem erfindungsgemäßen elektrischen Wasserkocher kann das zu reinigende Oberteil mühelos vom Unterteil abgenommen und maschinell gereinigt werden.

Das Verbindungselement besteht in aller Regel aus Kunststoff, kann durchaus aber auch aus Metall, insbesondere Edelstahl oder aus einem Verbund unterschiedlicher Materialien bestehen.

Zur Verbindung von Verbindungselement und Unterteil kann beispielsweise das Verbindungselement mit Schnappverschluß, einem Bajonettverschluß oder ähnlichem versehen werden, der mit einem komplementären Verschluß des Unterteils zusammenwirkt. Es ist auch denkbar, das Verbindungselement mit einem Außengewinde zu versehen, das in ein am Unterteil angebrachtes Innengewinde eingreift. Denkbar wäre auch, den erforderlichen komplementären Verschluß des Unterteil direkt in die Heizplatte im Bodenteil zu integrieren bzw. die Heizplatte von der Geometrie her so zu gestalten, daß diese - zusammen mit dem oberen Verbindungselement - den Verschluß bildet.

Das Oberteil besteht bevorzugt aus Borosilikatglas. Es ist insbesondere daran gedacht, daß das Oberteil aus dünnwandigem Glas besteht. Dieses sollte vorzugsweise durchsichtig sein, um die optische Attraktivität des Wasserkochers zu steigern.

Gemäß einer vorteilhaften Ausführungsform der Erfindung ist das Unterteil des Gefäßes im wesentlichen aus hitzebeständigem Kunststoff gefertigt und die Heizplatte, die gleichzeitig den Gefäßboden bildet, in das Unterteil hitzebeständig eingeklebt oder auch mechanisch fixiert, wobei als Heizelement beispielsweise eine Heizspirale oder eine Halogenlichtquelle, die bzw. das unterhalb der Heizplatte angeordnet ist, verwendet wird. Die Heizplatte kann beispielsweise aus Edelstahl oder Glaskeramik bestehen, wobei Glaskeramik als absolut neutrales und inertes Material bekannt ist. Bei Verwendung einer Heizplatte mit einer Halogenlichtquelle und einer Heizplatte aus Glaskeramik ergibt sich zusätzlich ein optisch reizvoller Effekt. Der im Raum befindliche Wasserkocher zeigt insbesondere dem Benutzer bei Verlassen des Raumes an, daß das Gerät in Betrieb ist.

Die Klebverbindung zwischen dem Oberteil und dem Verbindungselement und/oder der einzuklebenden Heizplatte aus Edelstahl oder Glaskeramik im Unterteil erfolgt gemäß einer besonderen Ausgestaltung der Erfindung mittels eines Silikonklebers. Dieser ist insbesondere selbst nivellierend. Besteht das Verbindungselement bzw. der Verschluß aus Metall, besitzt der Kleber wegen der unterschiedlichen Wärmeausdehnung von Glas und Metall Pufferfunktion und gleicht diese unterschiedlichen Dehnungen aus.

Die bei dem Wasserkocher zu verklebenden Kunststoffteile, insbesondere das Verbindungselement und das Unterteil, gegebenenfalls ein am Oberteil seitlich anzubringender Griff mit integriertem Deckel bestehen insbesondere aus einem PP- oder ABS-Kunststoff oder einem Verbund dieser Kunststoffe. Unter Kostengesichtspunkten ist der PP-Kunststoff, unter thermischen Gesichtspunkten der ABS-Kunstoff vorzuziehen.

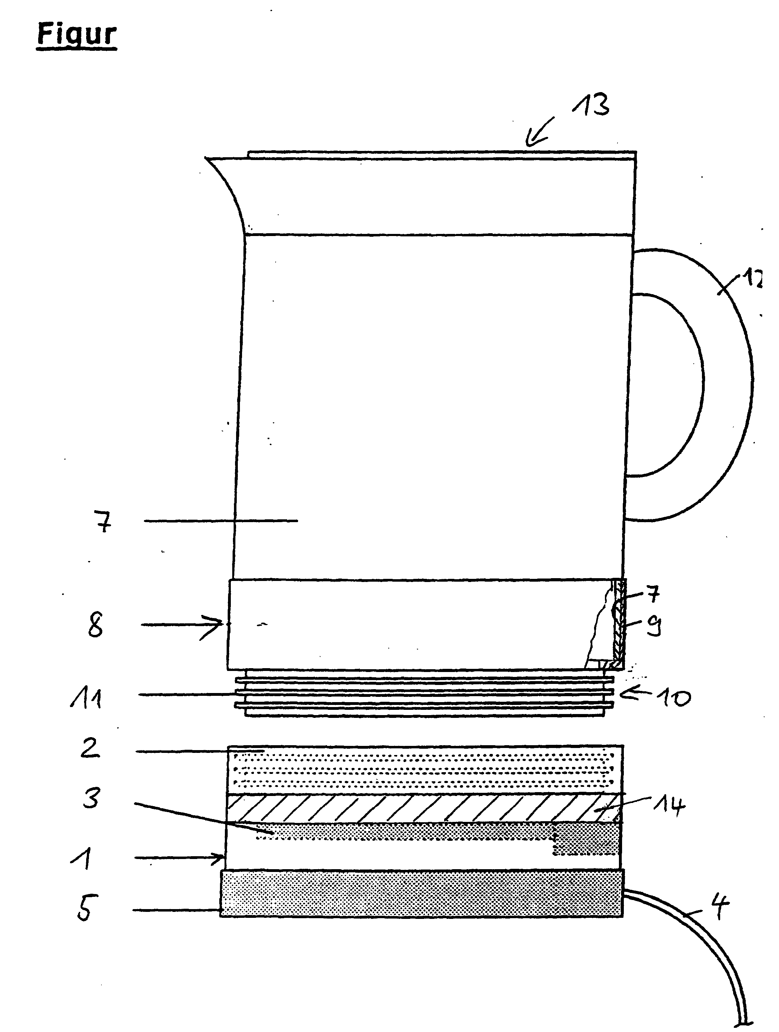

In der einzigen Figur ist die Erfindung anhand eines Ausführungsbeispieles dargestellt, ohne hierauf beschränkt zu sein.

Die Figur zeigt einen elektrischen Wasserkocher dessen Unterteil 1 ein Innengewinde 2 aufweist. In das Unterteil 1 ist eine den Boden des Gefäßes bildende Heizplatte 14, bevorzugt aus Edelstahl oder Glaskeramik, sowie ein Heizelement 3 integriert. Die Heizplatte 14 ist in das Unterteil 1 eingeklebt oder mechanisch und unter Zuhilfenahme eines Dichtrings fixiert, so daß diese eine abgedichtete Bodenplatte für das Gefäß bildet. Der Kontakt zu einem Netzanschluß 4 mit integriertem Thermostat, der vom Boden 5 des Unterteils 1 abgeht, erfolgt durch Steckkontakte. Der Gehäusekörper des Unterteils 1 ist aus einem hitzebeständigen und gegebenenfalls Lebensmittel tauglichen Kunststoff gefertigt, sofern dieser mit dem Wasser in Kontakt gerät. Bei dem Heizelement 3 handelt es sich beispielsweise um eine Halogenlichtquelle oder eine mit der Unterseite der Heizplatte verbundene Heizwendel. Das Oberteil des Wasserkochers weist ein im Blasverfahren hergestelltes, hitzebeständiges und dünnwandiges, durchsichtiges Borosilikatglasteil 7 auf, das als Hohlzylinder ausgebildet ist, und das im Bereich seines unteren Endes mit einem oben und unten offenen Kunststoffverbindungselement 8 fest verklebt ist. An den Randbereich 9 des Verbindungselementes 8 schließt sich dessen Gewindeabschnitt 10 mit einem Außengewinde 11 an. Das Verbindungselement 8 ist mit seinem Außengewinde 11 in das Innengewinde 2 des Unterteils 1 einschraubbar, derart, daß die Verbindung in diesem Bereich gegen Leckagen abgedichtet ist, unter Umständen unter Verwendung eines zusätzliches Dichtringes oder durch Aufbringen eines Spezialklebers als Druckdichtung auf der Unterseite des Verbindungselementes. Wird Wasser in das Glasteil 7 eingefüllt, bildet die Heizplatte 14 den Boden des eigentlichen Gefäßes. Es ist nun möglich, bei Bedarf die Einheit aus Glasteil 7 und Verbindungselement 8 vom Unterteil 1 einfach abzuschrauben, um diese Einheit zu reinigen oder auszutauschen. Die Figur zeigt ferner, daß mit dem Glasteil 7 ein Griff 12, der insbesondere aus Kunststoff besteht, verklebt ist und daß auf den oberen umlaufenden Rand des Glasteiles ein Schüttrand mit Deckel, der wie der Griff 12 insbesondere aus Kunststoff besteht, aufgesteckt und gegebenenfalls zusätzlich mit dem Glasteil 7 verklebt ist.

Insbesondere die Verbindung zwischen dem Glasteil 7 und dem Verbindungselement 8, die Verbindung des Griffes 12 mit dem Glasteil 7, die Verbindung des Schüttrandes 13 mit dem Glasteil 7 sowie die Verbindung des Heizelementes 3 mit Thermostat mit dem Unterteil 1 und der Glaskeramikplatte 14 mit dem Gehäuse des Unterteils 1 erfolgt vorzugsweise mittels eines Silikonklebers. Gedacht ist insbesondere an einen Silikonkleber der Marke PACTAN 5061, 5071 oder 6021 (Heidelberger Bauchemie GmbH, Traunraut, registriert gemäß UL 94 unter Nummer 107866) oder 6010, nach entsprechender Vorbehandlung durch einen sogenannten und hierfür geeigneten Primer.

Die bei dem erfindungsgemäßen elektrischen Wasserkocher Verwendung findenden Kunststoffbauteile, insbesondere das Verbindungselement 8, der Griff 12, der Schüttrand 13 und das Unterteil 1 bestehen zweckmäβig aus dem vorgenannten PP- oder ABS-Kunststoff, oder einem Verbund dieser Kunststoffe. Als ABS-Kunststoff kommt insbesondere der unter der Marke "ABS Novodur P2T" der Bayer AG vertriebene Kunststoff in Frage.

## Patentansprüche

1. Elektrischer Wasserkocher, der ein Gefäß (7, 8, 1), eine den Boden des Gefäßes (7, 8, 1) bildende Heizplatte (14), ein Heizelement (3), einen Thermostat sowie einen Netzanschluß (4) aufweist, wobei das Gefäß (7, 8, 1) aus einem oben und unten offenen Oberteil (7), einem Unterteil (1) mit Heizplatte (14) und Heizelement (3), sowie einem das Oberteil (7) und das Unterteil (1) verbindenden Verbindungselement (8) zusammengesetzt ist, **daduch gekennzeichnet**, daβ das Oberteil (7) aus hitzebeständigem Glas besteht und mit dem Verbindungselement (8) mittels einer Klebverbindung fest verbunden ist, sowie das Verbindungselement (8) mit dem Unterteil (1) lösbar verbunden ist.

2. Wasserkocher nach Anspruch 1, wobei das Verbindungselement (8) mit einem Schnappverschluß versehen ist, der mit einem komplementären Verschluß des Unterteils (1) zusammenwirkt.

3. Wasserkocher nach Anspruch 1, wobei das Verbindungselement (8) mit einem Bajonettverschluß versehen ist, der mit einem komplementären Bajonettverschluß des Unterteils (1) zusammenwirkt.

4. Wasserkocher nach Anspruch 1, wobei das Verbindungselement (8) mit einem Außengewinde (10) versehen ist, das in ein am Unterteil (1) angebrachtes Innengewinde (2) eingreift.

5. Wasserkocher nach einem der Ansprüche 1 bis 4, wobei das Oberteil (7) aus hitzebeständigem Glas, insbesondere Borosilikatglas besteht.

6. Wasserkocher nach einem der Ansprüche 1 bis 5, wobei das Oberteil (7) aus dünnwandigem und/oder durchsichtigem Glas besteht.

7. Wasserkocher nach einem der Ansprüche 1 bis 6, wobei das Verbindungselement (8) und/oder das Unterteil (1) aus einem Kunststoff gefertigt sind, insbesondere aus einem PP- oder ABS-Kunststoff oder einem Verbund dieser Kunststoffe.

8. Wasserkocher nach einem der Ansprüche 1 bis 6, wobei das Verbindungselement (8) aus Metall, insbesondere Edelstahl besteht.

9. Wasserkocher nach einem der Ansprüche 1 bis 8, wobei das Verbindungselement (8) aus einem Verbund aus Kunststoff und Metall, insbesondere Edelstahl, besteht.

10. Wasserkocher nach einem der Ansprüche 1 bis 9, wobei die Heizplatte (14) und/oder das Heizelement (3) in das Unterteil (1) hitzebeständig eingeklebt ist.

11. Wasserkocher nach einem der Ansprüche 1 bis 10, wobei die Heizplatte (14) und/oder das Heizelement (3) im Unterteil (1) mechanisch fixiert ist.

12. Wasserkocher nach einem der Ansprüche 1 bis 11, wobei als Heizelement (3) eine Heizplatte, eine Heizspirale oder eine Halogenlichtquelle verwendet wird.

13. Wasserkocher nach einem der Ansprüche 1 bis 12, wobei die Heizplatte (14) als Glaskeramikplatte oder Edelstahlplatte ausgebildet ist.

14. Wasserkocher nach einem der Ansprüche 1 bis 12, wobei das Heizelement (3) mit der Heizplatte (14) oder dem Unterteil (1) befestigt, insbesondere verklebt ist.

15. Wasserkocher nach einem der Ansprüche 1 bis 14, wobei der Kleber zum Verkleben von Oberteil (7) und Verbindungselement (8) und/oder von Unterteil (1) und Heizelement (3) und/oder Heizplatte (14) und Unterteil (1) und/oder Heizplatte (14) und Heizelement (3) ein Silikonkleber ist.

16. Wasserkocher nach Anspruch 15, wobei der Kleber ein selbst nivellierender Kleber, insbesondere ein Ein- oder Zweikomponentenkleber ist.

## Claims

1. Electrical liquid heating vessel having a vessel body (7, 8, 1), a heating plate (14) forming the base of the vessel (7, 8, 1), a heating element (3), and a thermostat together with a mains supply connection (4), the vessel(7, 8, 1) being composed of an upwardly and downwardly open upper part (7), a lower part (1) with heating plate (14) and heating element (3), and a connecting element (8) connecting the upper part (7) and the lower part (1), **characterised in that** the upper part (7) consists of heat-resistant glass and is permanently connected by bonding to the connecting element (8) while the connecting element (8) is connected detachably to the lower part (1).

2. Electrical liquid heating vessel according to Claim 1, in which the connecting element (8) is provided with a snap closure which interacts with a complementary closure on the lower part (1).

3. Electrical liquid heating vessel according to Claim 1, in which the connecting element (8) is provided with a bayonet connector which interacts with a complementary bayonet connector on the lower part (1).

4. Electrical liquid heating vessel according to Claim 1, in which the connecting element (8) is provided with an external thread (10) which engages in an internal thread (2) located in the lower part (1).

5. Electrical liquid heating vessel according to one of Claims 1 to 4, in which the upper part (7) consists of heat-resistant glass, in particular borosilicate glass.

6. Electrical liquid heating vessel according to one of Claims 1 to 5, in which the upper part (7) consists of thin walled and / or transparent glass.

7. Electrical liquid heating vessel according to one of claims 1 to 6, in which the connecting element (8) and / or the lower part (1) is manufactured form a plastic, in particular a PP or ABS plastic or a composite of these plastics.

8. Electrical liquid heating vessel according to one of Claims 1 to 6, in which the connecting element (8) consists of metal, in particular stainless steel.

9. Electrical liquid heating vessel according to one of Claims 1 to 8, in which the connecting element (8) consists of a composite of plastic and metal, in particular stainless steel.

10. Electrical liquid heating vessel according to one of Claims 1 to 9, in which the heating plate (14) and / or the heating element (3) is bonded heat-resistantly into the lower pert (1).

11. Electrical liquid heating vessel according to one of claims 1 to 10, in which the heating plate (14) and / or the heating element (3) is fixed mechanically into the lower part (1).

12. Electrical liquid heating vessel according to one of Claims 1 to 11, in which a heating plate, a heating spiral or a halogen light source is used as the heating element (3).

13. Electrical liquid heating vessel according to one of Claims 1 to 12, in which the heating plate (14) is formed as a glass-ceramic or stainless steel plate.

14. Electrical liquid heating vessel according to one of Claims 1 to 12, in which the heating element (3) is fixed, in particular bonded to the heating plate (14) or to the lower part (1).

15. Electrical liquid heating vessel according to one of claims 1 to 14, in which the bonding agent for the bonding of upper part (7) and connecting element (8) and / or of lower part (1) and heating element (3) and / or of heating plate (14) and lower part (1) and / or of heating plate (14) and heating element (3) is a silicone bonding agent.

16. Electrical liquid heating vessel according to Claim 15, in which the bonding agent is a self-levelling bonding agent, in particular a single or dual component bonding agent.

## Revendications

1. Bouilloire électrique comprenant un récipient (7, 8, 1), une plaque chauffante (14) formant le fond de la bouilloire (7, 8, 1), un élément chauffant (3), un thermostat ainsi qu'un raccord au réseau (4), le réservoir (7, 8, 1) étant composé d'une partie supérieure (7) ouverte au-dessus et au-dessous d'une partie inférieure (1) avec la plaque chauffante (14) et l'élément chauffant (3), ainsi que d'un élément (8) de liaison de la partie supérieure (7) à la partie inférieure (1),
**caractérisée en ce que**
la partie supérieure (7) est constituée d'un verre résistant aux températures élevées, et est reliée d'une façon rigide à l'élément de liaison (8) par collage, et l'élément de liaison (8) est relié à la partie inférieure (1) d'une façon amovible.

2. Bouilloire selon la revendication 1,
**caractérisée en ce que**
l'élément de liaison (8) est équipé d'une fermeture à déclic, coopérant avec une fermeture complémentaire de la partie inférieure (1).

3. Bouilloire selon la revendication 1,
**caractérisée en ce que**
l'élément de liaison (8) est équipé d'une fermeture à baïonnette coopérant avec une fermeture à baïonnette complémentaire de la partie inférieure (1).

4. Bouilloire selon la revendication 1,
**caractérisée en ce que**
l'élément de liaison (8) est pourvu d'un filetage extérieur (10) venant se visser dans un filetage intérieur (2) monté dans la partie inférieure (1).

5. Bouilloire selon l'une quelconque des revendications 1 à 4,
**caractérisée en ce que**
la partie supérieure (7) est réalisée en verre résistant aux hautes températures, par exemple en verre aux borosilicates.

6. Bouilloire selon l'une quelconque des revendications 1 à 5,
**caractérisée en ce que**
la partie supérieure (7) est réalisée en verre à parois minces et/ou en verre transparent.

7. Bouilloire selon l'une quelconque des revendications 1 à 6,
**caractérisée en ce que**
l'élément de liaison (8) et/ou la partie inférieure (1) sont réalisés en plastique, notamment en polypropylène ou en ABS, ou en un composite de ces plastiques.

8. Bouilloire selon l'une quelconque des revendications 1 à 6,
**caractérisée en ce que**
l'élément de liaison (8) est réalisé en métal, en particulier en acier inoxydable.

9. Bouilloire selon l'une quelconque des revendications 1 à 8,
**caractérisée en ce que**
l'élément de liaison (8) est réalisé en une combinaison de plastique et de métal, en particulier d'acier inoxydable.

10. Bouilloire selon l'une quelconque des revendications 1 à 9,
**caractérisée en ce que**
la plaque chauffante (14) et/ou l'élément chauffant (3) sont collés à l'intérieur de la partie inférieure (1) suivant un procédé résistant à la chaleur.

11. Bouilloire selon l'une quelconque des revendications 1 à 10,
**caractérisée en ce que**
la plaque chauffante (14) et/ou l'élément chauffant (3) sont fixés mécaniquement à l'intérieur de la partie inférieure (1).

12. Bouilloire selon l'une quelconque des revendications 1 à 11,
**caractérisée en ce qu'**
on utilise comme élément chauffant (3) une plaque chauffante, un élément chauffant en spirale ou une source lumineuse halogène.

13. Bouilloire selon l'une quelconque des revendications 1 à 12,
**caractérisée en ce que**
la plaque chauffante (14) est une plaque vitrocéramique ou une plaque en acier inoxydable.

14. Bouilloire selon l'une quelconque des revendications 1 à 12,
**caractérisée en ce que**
l'élément chauffant (3) est relié à la plaque chauffante (14) ou à la partie inférieure (1), en particulier par collage.

15. Bouilloire selon l'une quelconque des revendications 1 à 14,
**caractérisée en ce que**
la colle pour le collage de la partie supérieure (7) sur l'élément de liaison (8), et/ou de la partie inférieure (1) sur l'élément chauffant (3) et/ou de la plaque chauffante (14) sur la partie inférieure (1) et/ou de la plaque chauffante (14) sur l'élément chauffant (3) est une colle aux silicones.

16. Bouilloire selon revendication 15,
**caractérisée en ce que**
la colle est une colle à auto-nivellement, en particulier une colle à un ou deux composants.
